(19) Europäisches Patentamt
European Patent Office
Office européen des brevets

(11) **EP 4 283 898 A1**

(12) **EUROPEAN PATENT APPLICATION**
published in accordance with Art. 153(4) EPC

(43) Date of publication:
**29.11.2023 Bulletin 2023/48**

(21) Application number: **22742801.8**

(22) Date of filing: **18.01.2022**

(51) International Patent Classification (IPC):
**H04L 1/18** (2023.01)     **H04L 5/00** (2006.01)
**H04W 72/04** (2023.01)     **H04W 72/12** (2023.01)
**H04B 7/0408** (2017.01)

(52) Cooperative Patent Classification (CPC):
**H04B 7/0408; H04L 1/18; H04L 5/00; H04W 72/04; H04W 72/12**

(86) International application number:
**PCT/KR2022/000920**

(87) International publication number:
**WO 2022/158825 (28.07.2022 Gazette 2022/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.01.2021 KR 20210008054**

(71) Applicant: **LG Electronics Inc.**
**Yeongdeungpo-gu**
**Seoul 07336 (KR)**

(72) Inventors:
• **CHUNG, Jaehoon**
  **Seoul 06772 (KR)**
• **KANG, Jiwon**
  **Seoul 06772 (KR)**
• **KIM, Seonwook**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD AND DEVICE FOR TRANSMITTING/RECEIVING UPLINK IN WIRELESS COMMUNICATION SYSTEM**

(57)     Disclosed are a method and device for carrying out uplink transmission in a wireless communication system. The method for a terminal carrying out uplink transmission, according to one embodiment of the present disclosure, may comprise the steps of: receiving, from a base station, DCI including TCI state indication information; and transmitting, in a specific slot, to the base station, ACK/NACK feedback associated with the TCI state indication information, on the basis of whether the DCI includes scheduling information for scheduling a specific channel.

FIG.7

```
┌─────────────────────────────────────┐
│ RECEIVING DCI INCLUDING INFORMATION  │
│ INDICATING A TCI STATE FROM A BASE   │~ S710
│ STATION                              │
└─────────────────────────────────────┘
                   │
                   ▼
┌─────────────────────────────────────┐
│ TRANSMITTING, TO THE BASE STATION,   │
│ ACK/NACK FEEDBACK FOR THE TCI        │
│ STATE INDICATION INFORMATION IN A    │
│ SPECIFIC SLOT BASED ON WHETHER       │~ S720
│ THE DCI INCLUDES SCHEDULING          │
│ INFORMATION FOR SCHEDULING A         │
│ SPECIFIC CHANNEL                     │
└─────────────────────────────────────┘
```

EP 4 283 898 A1

**Description**

[Technical Field]

The present disclosure relates to a wireless communication system, and more particularly, to a method and apparatus for transmitting and receiving an uplink in a wireless communication system.

[Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and apparatus for performing uplink transmission and reception in a wireless communication system.

An additional technical object of the present disclosure is to provide a method and apparatus for transmitting and receiving ACK/NACK feedback when a beam is indicated based on downlink control information in a wireless communication system.

The technical objects to be achieved by the present disclosure are not limited to the above-described technical objects, and other technical objects which are not described herein will be clearly understood by those skilled in the pertinent art from the following description.

[Technical Solution]

According to an embodiment of the present disclosure, a method for performing uplink transmission by a user equipment (UE) in a wireless communication system may include receiving downlink control information (DCI) including information indicating a transmission configuration indicator (TCI) state from a base station; and transmitting, to the base station, acknowledgment (ACK)/negative acknowledgment (NACK) feedback for the TCI state indication information in a specific slot based on whether the DCI includes scheduling information for scheduling a specific channel.

According to an embodiment of the present disclosure, a method for performing uplink reception by a base station in a wireless communication system may include transmitting, to a user equipment (UE), downlink control information (DCI) including information indicating a transmission configuration indicator (TCI) state; and receiving, from the UE, acknowledgment (ACK)/negative acknowledgment (NACK) feedback for the TCI state indication information in a specific slot based on whether the DCI includes scheduling information for scheduling a specific channel.

[Technical Effects]

According to an embodiment of the present disclosure, a method and apparatus for performing uplink transmission and reception in a wireless communication system may be provided.

According to an embodiment of the present disclosure, a method and apparatus for transmitting and receiving ACK/NACK feedback when a beam is indicated based on downlink control information in a wireless communication system may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 is a diagram for describing an uplink transmission operation of a user equipment (UE) according to an embodiment of the present disclosure.
FIG. 8 is a diagram for describing an uplink reception operation of a base station according to an embodiment of the present disclosure.
FIG. 9 is a diagram for describing a signaling procedure of a network side and a UE according to an embodiment of the present disclosure.
FIG. 10 illustrates a block configuration diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (LTL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel

- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

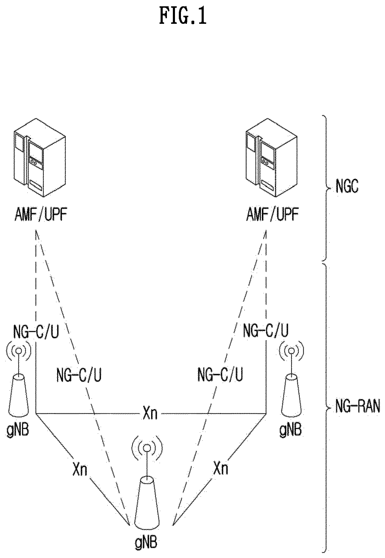

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

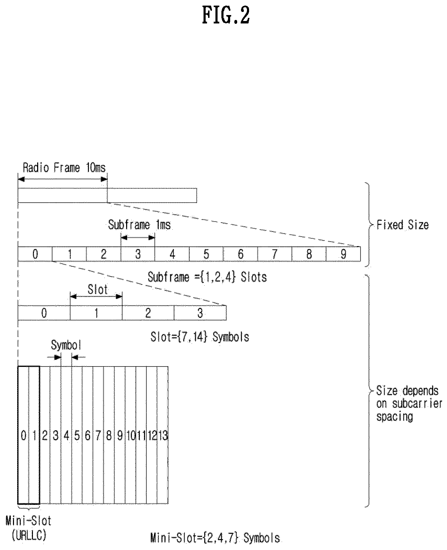

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu} \cdot 15$ [kHz] | CP |
|---|---|---|
| 0 | 15 | Normal |
| 1 | 30 | Normal |

(continued)

| μ | $\Delta f=2^{\mu}\cdot15$ [kHz] | CP |
|---|---|---|
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is $480\cdot10^3$ Hz and $N_f$ is 4096. Downlink and uplink transmission is configured (organized) with a radio frame having a duration of $T_f=1/(\Delta f_{max}N_f/100)\cdot T_c$=10ms. Here, a radio frame is configured with 10 subframes having a duration of $T_{sf}=(\Delta f_{max}N_f/1000)\cdot T_c$=1ms, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration μ, slots are numbered in an increasing order of $n_s^{\mu}\in\{0,...,N_{slot}^{subframe,\mu}-1\}$ in a subframe and are numbered in an increasing order of $n_{s,f}^{\mu}\in\{0,...,N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| It | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| It | $N_{symb}^{slot}$ | $N_{slot}^{frame,\mu}$ | $N_{slot}^{subframe,\mu}$ |
|---|---|---|---|
| 2 | 12 | 40 | 4 |

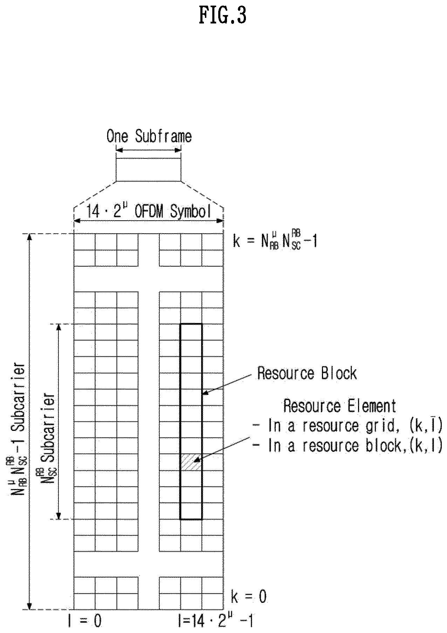

FIG. 2 is an example on $\mu$=2 (SCS is 60kHz), 1 subframe may include 4 slots referring to Table 3. 1 subframe={ 1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing. FIG. 3 illustrates a resource grid in a wireless communication system to which the present disclosure may be applied. In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain. Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

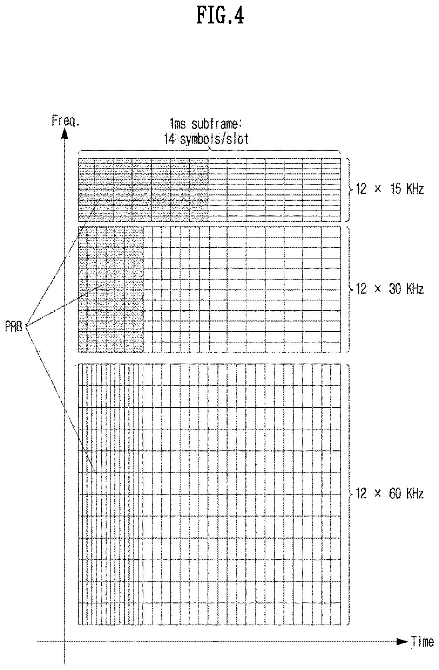

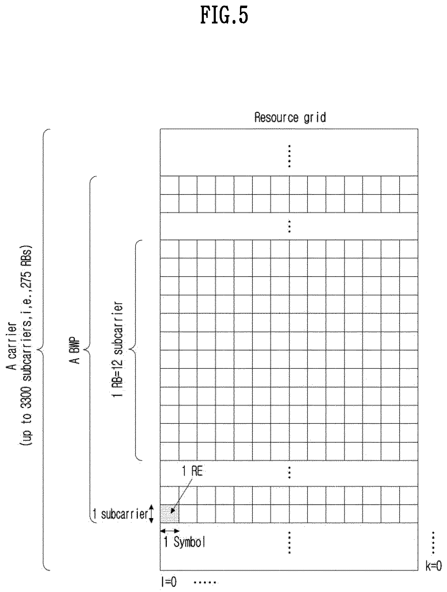

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/LTL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/LTL BWP. Here, an activated DL/LTL BWP is defined as an active DL/LTL BWP. But, a configuration on a DL/UL BWP may not be received when a terminal performs an initial access procedure or before a RRC connection is set up, so a DL/UL BWP which is assumed by a terminal under these situations is defined as an initial active DL/LTL BWP.

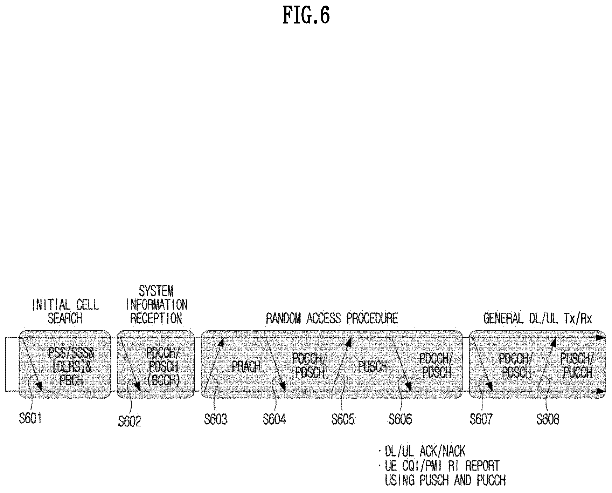

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a LTE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted. Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Basic beam failure recovery (BFR)

The UE and/or the base station may perform uplink/downlink beam management (BM) for data transmission/reception. Here, BM may refer to a process of obtaining and maintaining a beam set that can be used for downlink and uplink transmission/reception.

Specifically, BM may include a beam measurement process of measuring the characteristics of a beamforming signal received from a base station or a UE, a beam determination process of determining a transmission beam (Tx beam) and a reception beam (Rx beam) of the base station or the terminal itself, a beam sweeping process of covering a spatial region using a transmit beam and/or a receive beam for a predetermined time interval in a predetermined manner, and a beam reporting process in which the UE reports information of the beam signal to the base station based on the beam measurement result.

While the above-described uplink/downlink BM process is performed, a beam mismatch problem may occur due to various factors. For example, when the LTE moves or rotates, or when a radio channel environment is changed due to movement of a nearby object (e.g., when it was a line-of-sight (LoS) environment and then changed to a non-LoS environment as the beam was blocked), an optimal uplink/downlink beam pair may be changed. At this time, when the LTE or the base station fails to track the changed optimal uplink/downlink beam pair (i.e., BM tracking), it may be considered that a beam failure has occurred.

The LTE may determine whether beam failure has occurred based on the reception quality of a downlink reference signal (RS). In addition, the UE must report a report message on whether beam failure has occurred or a message for a beam recovery request (beam failure recovery request message, BFRQ message) to the base station. Upon receiving the message, the base station may perform a beam recovery process through various processes such as beam RS transmission or beam report request for beam recovery. This series of beam recovery processes is called a beam failure recovery (BFR) process.

The basic BFR process consists of a beam failure detection (BFD) process of the LTE, a BFRQ transmission process, and a process of monitoring the base station's response to the BFRQ, and each process can be performed in a serving cell.

Beam failure detection (BFD)

When the quality value (Q_out) of all PDCCH beams falls below a predefined value, it may be considered that one beam failure instance has occurred. Here, the quality value may be determined based on a hypothetical block error rate (BLER). That is, the theoretical BLER may mean a probability that demodulation of the control information fails when the control information is transmitted on a specific PDCCH.

In addition, one or a plurality of search spaces for monitoring the PDCCH may be configured in the UE, and a PDCCH beam may be configured differently for each search space. In this case, when the quality values of all PDCCH beams fall below the predefined value, it means that the quality values of all PDCCH beams fall below the BLER threshold.

Two methods, which will be described later, may be supported as a method for the LTE to receive an indication/configuration of a BFD-RS from the base station for determining whether a beam failure instance has occurred.

As a first method, an implicit configuration method of BFD-RS may be supported. A control resource set (CORESET) ID, which is a resource region in which the PDCCH may be transmitted, is configured in each search space, and RS information (e.g., CSI-RS resource ID, SSB ID) QCLed in terms of spatial RX parameters may be indicated/configured for each CORESET ID. In view of spatial reception parameters, the QCLed RS may be indicated or configured through transmit configuration information (TCI). That is, the BFD-RS may be implicitly configured/indicated to the UE based on QCL information indicated or configured through TCI.

Here, when the base station indicates or configures the RS (i.e., QCL Type D RS) that is QCL from the point of view of the spatial reception parameter to the UE, when the UE receives a specific PDCCH DMRS, the beam used for reception of the RS that is QCL from the point of view of the spatial reception parameter may be used. That is, a signal may be transmitted between spatially QCLed antenna ports through the same transmission beam or similar transmission beams (e.g., when beam widths are different while beam directions are the same/similar).

As a second method, an explicit configuration method of the BFD-RS may be supported. The base station may explicitly configure or indicate the UE to use the beam RS for BFD. In this case, the beam RS may correspond to the 'all PDCCH beams'.

The UE physical layer may inform the MAC sublayer that the BFI(beam failure instance) has occurred whenever an event in which the theoretical BLER measured based on the configured (or indicated) BFD-RS deteriorates beyond a specific threshold value occurs. And, when BFI occurs a certain number of times (e.g. 'beamFailureInstanceMaxCount') within a certain time (e.g., 'BFD timer'), the UE MAC sublayer may determine that a beam failure has occurred and initiate a related RACH operation.

BFRQ (PRACH based): new beam identification and PRACH transmission

As described above, when more than a certain number of BFIs are generated, the UE may determine that a beam failure has occurred, and may perform a beam failure recovery operation. The UE may perform a BFRQ process based on RACH (i.e., PRACH) as an example of a beam failure recovery operation. Hereinafter, the corresponding BFRQ process will be described in detail.

When a beam failure occurs, the base station may configure a candidate beam RS list ('candidateBeamRSList') including replaceable candidate beam RSs to the terminal through RRC signaling. And, the base station may configure a dedicated PRACH resource for the candidate beam RSs. In this case, the dedicated PRACH resource may be a non-contention based PRACH resource (or a contention free PRACH resource). When an alternative beam RS is not found in the candidate beam RS list, the UE may select at least one of preset SSB resources. And, the LTE may transmit a contention-based PRACH to the base station based on at least one selected.

Enhanced beam failure recovery

When carrier aggregation (CA) is applied, there may be no uplink carrier (UL carrier) in a specific SCell. That is, in the case of an SCell having only a downlink carrier, uplink transmission is impossible. And, even if there is an uplink carrier in the SCell, the contention-based PRACH cannot be configured. Therefore, the PRACH-based BFR process to which CA is applied may be limitedly applied only to the SpCell (PCell or PSCell), and the BFR process may not be supported for the SCell. That is, according to the basic BFR operation, the PRACH-based BFR operation in the SpCell may not be supported in the SCell.

Specifically, when a high-frequency band requiring BFR is configured to the SCell, the PRACH-based BFR process may not be supported in the corresponding high-frequency band. For example, when the PCell is operated in a low frequency band (e.g., 6 GHz or less) and the SCell is operated in a high frequency band (e.g., 30 GHz), there is a problem that the PRACH-based BFR process is not supported in a high-frequency band that requires more BFR support.

In order to solve the above-mentioned problem, the improved BFR operation includes an operation for the BFR of the SCell. For example, the LTE may perform BFRQ for the SCell by using a dedicated PUCCH resource for BFRQ configured in the SpCell. Hereinafter, the 'dedicated PUCCH resource' will be referred to as BFR-PUCCH for convenience of description.

The role of the BFR-PUCCH is to report only 'BF occurrence information for SCell' to the base station. And, detailed information related to the generated BF may be transmitted to the base station through the BFR MAC-CE or UCI as a subsequent report.

Here, the detailed information transmitted as the follow-up report may include information on the SCell(s) in which BF has occurred, whether or not there is a new candidate beam for the SCell(s) in which BF has occurred, and (if there is a new candidate beam) the corresponding beam RS ID.

In addition, the BFR-PUCCH may use the same PUCCH format as an SR (scheduling request), and may be defined through the ID of a specific SR for BFR use. If the UL-SCH allocated from the base station exists when the UE detects the BF for the SCell, the UE may omit the BFR-PUCCH transmission procedure like the SR transmission procedure, and transmit the BFR MAC-CE to the base station through the directly allocated UL-SCH.

Beam indication/update operation based on TCI state

In a basic BM process, a beam indication/update operation may be performed through DL/UL DCI.

On the DL side, up to 8 TCI states activated through MAC-CE among up to 128 candidate TCI states configured by RRC may be mapped to the codepoint of the TCI field included in the DL DCI. When a subsequent PDSCH is scheduled through the DL DCI, one of the TCI states mapped to the codepoint may dynamically indicate a (PDSCH) beam.

On the UL side, the base station may indicate PUSCH scheduling to the terminal through DCI format 0, and indicate an SRS resource that can be referenced to configure/instruct a corresponding PUSCH transmission beam through an SRS resource indicator (SRI).

In describing the present disclosure, the term 'TCI' or 'TCI state' may collectively refer to information indicating a QCL assumption applied to uplink transmission and/or downlink reception of a UE and an RS resource (e.g., CSI-RS/SSB/SRS resources, etc.) referenced by spatial Tx/Rx parameters (e.g., QCL-Type D related parameters), spatial Tx/Rx filters.

That is, the LTE may perform uplink transmission and/or downlink reception by referring to the RS resource indicated through the TCI state. For example, the UE may perform corresponding uplink transmission and/or downlink reception operations using spatial transmission/reception parameters corresponding to the RS resource indicated by the TCI state (i.e., applied to the corresponding RS resource).

For example, the base station may dynamically indicate the TCI state to the UE. Here, the dynamic TCI indication may include indicating a specific TCI state by DCI among candidate (s) of TCI states preset by higher layer signaling (e.g., 'tci-StatesToAddModList', etc.).

The UE may update/change uplink and/or downlink transmission/reception beams based on a specific TCI state indicated through DCI. For example, when a specific TCI state indicating a specific DL / LTL RS that is a reference for spatial transmission/reception parameter (i.e., QCL-type D related parameters)/spatial relation information is indicated through DCI (i.e., a specific TCI state is dynamically indicated), the UE may update/change the beam of the target channel(s)/RS(s) to a beam corresponding to the specific referenced DL/UL RS.

In the improved BM process, a common/separate beam update operation for multiple channels/RSs may be performed through a joint/separate TCI state.

Specifically, in the improved BM process, a joint TCI for DL and LTL based on (or similar to) a basic DL TCI framework may be supported. Here, the joint TCI state means information indicating reference RS resource(s) for updating/changing both DL beams and UL beams, and a separate TCI state means information indicating reference RS resource(s) for updating/changing one or each of a DL beam or a UL beam.

The source RS(s) in M (Here, M is a natural number greater than or equal to 1) TCI may provide common QCL information for all or a subset of UE-dedicated reception on at least PDSCH and CORESETs in component carriers (CCs).

The common QCL information may also be applied to a CSI-RS resource for CSI, a CSI-RS resource for BM, and a CSI-RS for tracking. And, applicability to the PDSCH may include a PDSCH default beam.

Source RS(s) in N (N is a natural number greater than or equal to 1) TCI may provide a reference for determining a common LTL TX spatial filter for all or a subset of dedicated PUCCH resources in at least a dynamic-grant/configuration-grant based PUSCH, CC.

The corresponding UL TX spatial filter may also be applied to all SRS resources of a resource set configured for antenna switching/codebook based/non-codebook based UL transmission. A corresponding LTL TX spatial filter may be applied to the SRS configured for the BM, and a PUSCH port based on TCI may be determined.

QCL information may be applied only to a part of a PUCCH resource or CORESET in a CC (e.g., m-TRP). And, when joint beams for UL and DL are indicated, whether a joint TCI pool for dedicated DL and LTL is to be used or whether the same TCI pool used for separate DL/LTL beams is to be used may be indicated.

For downward selection, in the case of indicating separate beams for LTL and DL, a joint TCI state may be utilized to include references to both DL and UL beams, or separate TCI states may be utilized for each of the DL and UL beams. Here, the UL TCI state may be selected from the same TCI state pool as the DL TCI state or may be selected from a TCI state pool other than the DL TCI state.

In the unified TCI framework, the use of SRS (or SRS not used for BM) for BM and/or CSI-RS (or CSI-RS not used for BM)/SSB for BM as a source RS for determining a UL TX spatial filter may be supported. And, it may be determined whether the SRS for the BM may be configured as the source RS to indicate the DL RX spatial filter in the unified TCI framework.

In the unified TCI framework, a pool of joint DL/UL TCI states may be used for joint (or separate) DL/LTL TCI state updates (beam indications). Here, the pool of TCI states may be configured by higher layer signaling (e.g., RRC signaling).

Also, a signaling medium for performing the joint/individual beam update operation may be DCI signaling. That is, in order for DL/LTL beam change/update to be performed through DCI, a DCI format determination method (e.g., a method in which DCI formats 1_1 and 1_2 are reused for beam indication, etc.) and a DL/UL beam indication method may be set/instructed.

In addition, a scheme in which the UE confirms successful decoding of the beam indication may be supported. For example, ACK/NACK of a PDSCH scheduled by DCI carrying a beam indication may be used as ACK/NACK for DCI.

Method for configuring feedback for beam indication

When PDSCH decoding fails even though reception of a beam indication through DCI is successful, the UE may transmit a NACK to the base station. At this time, ambiguity may occur in terms of the base station interpreting the NACK. That is, when the UE is configured to transmit a NACK to the base station when the DCI is missed in a CA (carrier aggregation)/TDD situation, ambiguity may occur about the success or failure of DCI reception of the UE from the base station point of view.

Therefore, in the present disclosure, when a DCI-based joint/individual beam indication for dynamic UL/DL beam change/update is performed, a HARQ feedback configuring method for the corresponding indication may be disclosed.

TCI state indication behavior through DCI can limit (by definition) PDCCH / PHSCH transmission and reception operations in the indicated cell. Accordingly, the occurrence of a missing/false alarm may greatly affect subsequent operations of the network and the UE.

In order to solve the above-described problem, a method for increasing decoding performance may be applied, or an additional confirmation operation for an instruction of a TCI state indicating action may be required. In the present disclosure, in order to solve the above problems, an ACK/NACK feedback method for TCI status indication may be disclosed.

The TCI state may be indicated by adding or reinterpreting a specific (or partial) field included in the DCI scheduling the PDSCH. Here, two embodiments may be considered according to the role of DCI.

That is, in the present disclosure, an ACK/NACK feedback method (Embodiment 1) when DCI includes PDSCH scheduling information and TCI state indication and an ACK/NACK feedback method (Embodiment 2) when DCI includes TCI state indication without PDSCH scheduling information will be described.

Embodiment 1

Embodiment 1 is an embodiment of a method for transmitting ACK/NACK for a TCI state indication of a LTE when PDSCH scheduling information and TCI status indication are included in DCI.

ACK/NACK for the PDSCH scheduled by the corresponding scheduling information may be interpreted as ACK/NACK for the TCI status indication. However, even when the DCI is missing (e.g., when multiple PDSCHs are scheduled and HARQ-ACK feedback for the corresponding PDSCHs is transmitted on one PUCCH resource), there may be a case where the UE transmits a NACK.

At this time, from the point of view of the base station, there may be a problem in that it cannot be distinguished whether the corresponding NACK is a NACK due to missing DCI or a NACK meaning that DCI is received (i.e., TCI state indication is received) but decoding of the PDSCH has failed.

To solve this problem, ACK/NACK information corresponding to the PDSCH and ACK/NACK information for the TCI status indication may be transmitted through the same PUCCH resource.

Specifically, the LTE may, from the DCI or the corresponding PDSCH (i.e., from the time the DCI is received or the transmission time of the PDSCH scheduled by the DCI) through slots after the K1 slot, feedback (or transmit) ACK/NACK information corresponding to the PDSCH and ACK/NACK information for the TCI status indication together.

Here, K1 may mean a value (or offset value) indicated as HARQ-ACK feedback timing by DCI (or 'PDSCH-to-HARQ-ACK timing indicator' field of DCI).

A semi-static HARQ-ACK codebook (or type 1 codebook) or a dynamic HARQ-ACK codebook (or type 2 codebook) may be configured based on ACK/NACK information corresponding to the PDSCH.

In addition, a 1-bit HARQ-ACK corresponding to the TCI state indication may be appended to a specific position (e.g., the last position or corresponding highest bit index (e.g., LSB (least significant bit)) in the corresponding HARQ-ACK codebook.

That is, embodiment 1 may refer to an embodiment in which a (1 bit) ACK/NACK field for TCI status indication is added to an ACK/NACK report procedure for PDSCH scheduling indicated together with TCI state.

As another example, according to Embodiment 1, A (1 bit) ACK/NACK corresponding to the TCI state may be transmitted in the next position (or next bit) of the position of the HARQ-ACK bit corresponding to the corresponding PDSCH in the codebook (e.g., semi-static HARQ-ACK codebook).

As another example, according to Embodiment 1, a 1-bit HARQ-ACK corresponding to the TCI state may be transmitted at a specific position (e.g., the last position or the corresponding highest bit index (e.g., LSB)) of the HARQ-ACK payload corresponding to the cell in which the corresponding PDSCH is transmitted in the codebook (e.g., semi-static HARQ-ACK codebook).

As another example, the LTE may not expect PDSCH scheduling in a plurality of slots including the indicated slot or slot for switching the TCI state.

At this time, in the case of a TCI state indication transmitted to a specific PCell, in the HARQ-ACK codebook (e.g., semi-static HARQ-ACK codebook), HARQ-ACK for the TCI state of the corresponding cell may be transmitted at a position where HARQ-ACK information for the corresponding cell is transmitted at a specific timing (e.g., transmission timing).

As another example, as described above, instead of ACK/NACK for the TCI field, ACK/NACK for the PDCCH may be additionally transmitted along with HARQ-ACK/NACK for the PDSCH. That is, ACK/NACK information for PDCCH may be transmitted together with HARQ ACK/NACK information for PDSCH.

At this time, whether to enable ACK/NACK for the PDCCH may be determined by indication/configuration of the base station. In addition, the ACK/NACK information for the PDCCH may be transmitted only when HARQ-ACK/NACK information for the PDSCH scheduled by DCI is NACK. This is because it is obvious that when the HARQ-ACK/NACK information for the PDSCH is ACK, the HARQ-ACK/NACK value for the PDCCH is also ACK.

In describing the present disclosure, a semi-static codebook and a dynamic codebook may refer to a Type-1 codebook and a Type-2 codebook (or an enhanced Type-2 codebook).

In addition, the present disclosure may be extended and applied to a type-3 codebook based on an HARQ process index. For example, 1-bit HARQ-ACK corresponding to the TCI state indication may be added to a specific position (e.g., the last position or the highest bit index (e.g., LSB) corresponding thereto) in the corresponding HARQ-ACK codebook (e.g., Type-3 codebook).

As another example, in a codebook (e.g., Type-3 codebook), a 1-bit HARQ-ACK corresponding to a TCI state indication may be transmitted at a specific position (e.g., the last position or the corresponding highest bit index (e.g., LSB)) of an HARQ-ACK payload corresponding to a cell in which the PDSCH is transmitted.

Embodiment 2

Embodiment 2 is an embodiment of an ACK/NKAC feedback method when DCI does not include PDSCH scheduling information but includes TCI state indication. That is, in the case of Example 2, since the PDSCH is not scheduled by DCI, the UE may transmit ACK/NACK for the PDCCH (i.e., TCI status indication).

As an embodiment of the present disclosure, when a HARQ-ACK codebook (e.g., a semi-static HARQ codebook or a type-3 HARQ-ACK codebook) is configured, a (1 bit) HARQ-ACK field for TCI state indication may be appended to a specific position (e.g., the last position or the highest bit index (e.g., LSB) corresponding thereto) of the codebook (Method 1).

As another embodiment of the present disclosure, when a semi-persistent HARQ-ACK codebook is configured and HARQ-ACK is transmitted at a position corresponding to a DCI (or a slot in which the corresponding DCI is transmitted) in the HARQ-ACK codebook, the LTE may assume that there is no other unicast PDSCH reception in the same slot as the slot in which the PDCCH indicating the TCI state is transmitted (method 2).

Method 2 may be similar to a method of transmitting HARQ-ACK feedback for DCI indicating release of semi-persistent scheduling (SPS).

As another embodiment of the present disclosure, as in Embodiment 1, HARQ-ACK for TCI state indication may be transmitted at a HARQ-ACK position in a HARQ-ACK codebook (method 3).

HARQ-ACK feedback timing

HARQ-ACK feedback timing (for TCI state indication) in Embodiments 1 and 2 may be determined as follows.

As an embodiment of the present disclosure, the HARQ-ACK feedback timing may be determined from a slot in which a DCI including a TCI indication state is transmitted to a slot after K1 (option 1).

Here, K1 may mean a slot offset value between DCI (transmission time point) and HARQ-ACK (transmission time point), and may be indicated by the 'PDSCH-to-HARQ-ACK timing indicator field' of DCI.

As another embodiment of the present disclosure, HARQ-ACK feedback timing may be determined from a PDSCH location based on PDSCH resource allocation information in DCI including a TCI status indication to a slot after K1 slot (option 2).

In the case of option 2, there is no actually scheduled PDSCH, but the base station (network side) may transmit HARQ-ACK feedback timing for the TCI state indication to the UE by allocating a virtual PDSCH. That is, the HARQ-ACK feedback timing may be determined as a slot after slot K1 from the virtual PDSCH scheduled by DCI.

The above method may be applied only when a candidate PDSCH reception slot (or corresponding PDCCH monitoring occasion) associated with a UL channel carrying HARQ-ACK information includes a monitoring occasion for a PDCCH indicating a TCI state indication.

In addition, in the case of embodiment 1, it can be applied only when it is not a fallback PUCCH transmission (i.e., when the HARQ-ACK information to be actually fed back is 1 bit corresponding to only a single PDSCH of a single PCell or corresponds only to a single PDSCH whose counter-DAI (downlink assignment index) is 1).

That is, when the fallback PUCCH is transmitted, the UE may feed back only the HARQ-ACK for the scheduled PDSCH without separate HARQ-ACK feedback for the TCI state indication.

The UE that derives the slot offset in the above-described manner must determine which start and length indicator value (SLIV) in the PDSCH slot corresponding to the corresponding K1 should be mapped to HARQ-ACK. To this end, according to an embodiment of the present disclosure, a corresponding HARQ-ACK may be mapped to a virtual SLIV indicated by DCI or a specific (e.g., first or last) SLIV candidate. A method of mapping HARQ-ACK based on a virtual SLIV indicated by DCI or a feature SLIV candidate may be applied when constructing a HARQ-ACK codebook in Method 2 of Embodiment 2.

Embodiment 3

As described above, the TCI state indication may be transmitted together with DL scheduling information (e.g., PDSCH scheduling information), but may also be included in UL scheduling DCI and transmitted.

When the TCI state indication is transmitted in the UL scheduling DCI, the UE may transmit feedback to the base station to confirm whether reception of the TCI status indication was successful.

Embodiment 3-1

Embodiment 3-1 is an embodiment of a method for a LTE to transmit feedback on TCI state indication to a base station using a PUSCH.

DCI format 0_1 (or UL non-fallback DCI) may include a PUSCH resource allocation field, a UL-SCH indicator field, and a CSI request field.

At this time, CSI reporting and related operations of the LTE may be as follows. That is, in the following, the HARQ-ACK feedback method for the TCI state indication for each operation of the UE will be described.

In describing the present disclosure, if the UL-SCH indicator or CSI-request is OFF, it may mean that UL-SCH transmission is not indicated by the UL-SCH indicator field or CSI request is not indicated by the CSI-request field. And, that the LTL-SCH indicator or CSI-request is ON may mean that LTL-SCH transmission is indicated by the LTL-SCH indicator field or CSI request is indicated by the CSI-request field.

For example, when the UL-SCH indicator is OFF and the CSI-request is ON, the UE may perform an aperiodic CSI reporting operation through the PUSCH.

At this time, if the UE performs CSI reporting, the base station may determine (i.e., recognize) that the LTE has received DCI (including the TCI status indication), so a separate TCI state indication related feedback from the terminal may not be required.

As another example, when the UL-SCH indicator is OFF and the CSI-request is OFF, the LTE may perform only a measurement operation for DL without performing PUSCH transmission for CSI reporting. At this time, the UE may transmit a (null content) PUSCH to notify the base station whether or not the TCI status indication is received.

Here, the base station may inform the UE that the DCI has been transmitted because of the TCI state indication rather than DL measurement through another specific field or a combination with a specific field in the DCI. The UE may transmit the (null content) PUSCH to the base station according to the PUSCH scheduling of the corresponding DCI.

At this time, another specific field may be an additional 1 bit indicating that the corresponding DCI is a DCI dedicated to TCI state indication, or a field in which an existing field is configured to a specific value (e.g., all resource allocation fields are configured to 1, etc.).

That is, when a combination in which the TCI state indication is ON and at least one of {UL-SCH indicator, CSI request (or CSI reporting trigger)} is ON is indicated through the UL grant DCI, the UE may transmit a signal through a PUSCH resource to which the corresponding DCI is allocated.

As another example, when a combination in which the TCI state indication is OFF and {UL-SCH indicator, CSI request (or CSI reporting trigger)} is OFF is indicated through the UL grant DCI, the UE may not perform PUSCH transmission corresponding to the corresponding DCI.

Embodiment 3-2

Embodiment 3-2 is an embodiment of a method for a LTE to transmit feedback on TCI state indication to a base station using an HARQ-ACK feedback mechanism.

For example, when the UL-SCH indicator field is OFF and the CSI request field is OFF, the LTE may transmit explicit feedback for the TCI state indication to the base station.

At this time, the base station may inform the LTE that DCI transmission is for TCI state indication rather than DL measurement through a combination with another specific field in DCI. The LTE may transmit feedback on the TCI state indication to the base station using explicit feedback.

Here, the method using explicit feedback means a method of performing feedback for the TCI state indication by adding 1 bit separately when HARQ-ACK for other PDSCHs is fed back in a specific slot.

If there is no HARQ-ACK feedback for the other PDSCH, the LTE may perform feedback for the TCI state indication using the PUCCH. Here, the PUCCH resource for the PUCCH transmission may be configured through RRC signaling, configured/indicated in a LTL grant, or configured/indicated in a combination of RRC and LTL grants.

That is, when a signal indicating a TCI state indication is received through the UL grant DCI, feedback transmission timing and PUCCH transmission resources to be used/applied to feedback transmission for the corresponding TCI state indication may be indicated through fields in the DCI (or through reinterpretation of corresponding fields).

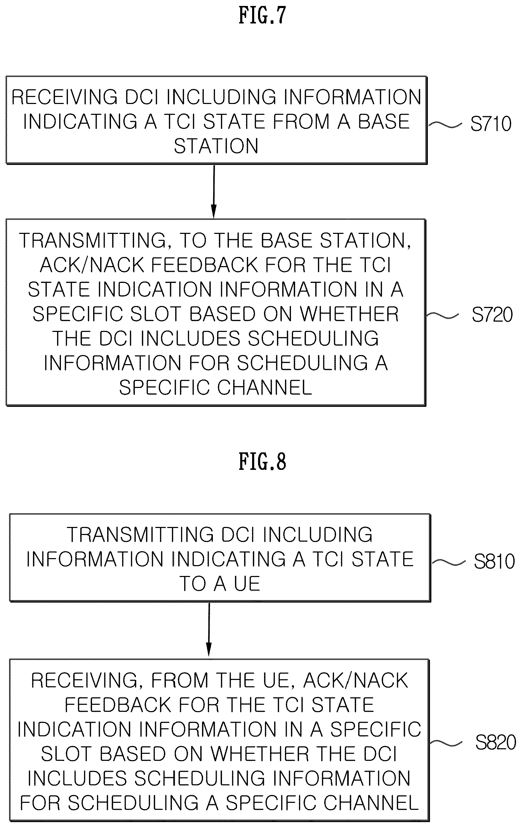

Hereinafter, referring to FIG. 7, an operation in which a UE transmits feedback on a TCI state based on DCI will be described in detail.

FIG. 7 is a diagram for describing an uplink transmission operation of a LTE according to an embodiment of the present disclosure.

The UE may receive downlink control information (DCI) including information indicating a transmission configuration indicator (TCI) state from the base station (S710).

A TCI state may correspond to one or more RSs (or one set of RSs). That is, the TCI state may include information indicating one or more RSs having a QCL relationship.

And, the ID of one or more RSs (or one RS set) corresponding to the TCI state may indicate/reference a quasi-co-location (QCL) indication RS (e.g., CSI-RS, SSB, etc.) for (e.g., QCL type-D related to spatial parameters).

As another embodiment of the present disclosure, a UE may receive DCI including spatial parameters (e.g., spatial filters, etc.) for DL/UL transmission and DL/UL TCI state (or unified TCI state) indication information from a base station.

The LTE may transmit ACK/NACK feedback for TCI state indication information to the base station in a specific slot based on whether scheduling information for scheduling a specific channel is included in the DCI (S720).

As an embodiment of the present disclosure, ACK/NACK feedback for TCI state indication may include ACK/NACK for a physical downlink control channel (PDCCH) carrying DCI.

As another embodiment of the present disclosure, the specific channel may be a physical downlink shared channel (PDSCH). And, based on the DCI including scheduling information for scheduling the PDSCH, the UE may transmit ACK/NACK feedback for the TCI state indication information and ACK/NACK feedback for the PDSCH (i.e., ACK/NACK information) to the base station through one physical uplink control channel(PUCCH).

Here, the ACK/NACK feedback for the TCI state indication information may be mapped to a specific position in a hybrid automatic repeat request (HARQ)-ACK codebook for transmission of ACK/NACK feedback for the PDSCH.

Here, the specific position may be the last bit of the HARQ-ACK codebook or the next position (or bit) of ACK/NACK feedback for the PDSCH included in the HARQ-ACK codebook.

As another example, ACK/NACK feedback for TCI state indication information may be mapped to a specific position (e.g. the last bit of the payload (e.g., LSB), etc.) of an HARQ-ACK payload corresponding to a cell in which the PDSCH is transmitted.

As another embodiment of the present disclosure, based on the DCI not including scheduling information for scheduling the PDSCH, the UE may map ACK/NACK feedback for the TCI state indication information to a specific position in the HARQ-ACK codebook and transmit it to the base station.

In describing the present disclosure, the HARQ-ACK codebook may mean one of a type-1 HARQ-ACK codebook, a type-2 HARQ-ACK codebook, or a type-3 HARQ-ACK codebook.

And, the specific slot (that is, timing at which ACK/NACK feedback for TCI state indication information is transmitted) may be a slot after an offset value indicated by DCI from a slot in which DCI is transmitted.

As another example, the specific slot may be a slot after a specific offset value from a slot corresponding to a PDSCH scheduled by DCI.

As another embodiment of the present disclosure, the specific channel is a physical uplink shared channel (PUSCH), and the scheduling information may include at least one of an uplink-shared channel (UL-SCH) indicator field, a channel state information (CSI) request field, and a PUSCH resource allocation field.

At this time, based on UL-SCH transmission being not indicated by the UL-SCH indicator field and CSI request being not indicated by the CSI request field, the UE may transmit ACK/NACK feedback for TCI state indication information to the base station in a specific slot through (null content) PUSCH.

As another example, based on UL-SCH transmission being not indicated by the UL-SCH indicator field, the CSI request being not indicated by the CSI request field, and indication that ACK/NACK feedback (or HARQ-ACK feedback) for another PDSCH is transmitted in the specific slot, the UE may transmit ACK/NACK feedback for the TCI state indication information to the base station in a specific slot in addition to ACK/NACK feedback for the PDSCH (or HARQ-ACK feedback).

As another example, based on UL-SCH transmission being not indicated by the UL-SCH indicator field, the CSI request being not indicated by the CSI request field, and transmission of ACK/NACK feedback (or HARQ-ACK feedback) for another PDSCH being not indicated in a specific slot, the LTE may transmit feedback on the TCI state indication information to the base station in a specific slot through PUCCH.

As another example, based on UL-SCH transmission being not indicated by the UL-SCH indicator field and CSI request being indicated by the CSI request field, the UE may transmit an aperiodic CSI report to the base station through the PUSCH, and may not transmit separate ACK/NACK feedback for the TCI state indication information to the base station in a specific slot.

FIG. 8 is a diagram for describing an uplink reception operation of a base station according to an embodiment of the present disclosure.

The base station may transmit DCI including information indicating the TCI state to the UE (S810). Since the description related to the TCI state has been described above, redundant description will be omitted.

The base station may receive ACK/NACK feedback for the TCI state indication information from the UE based on whether the DCI includes scheduling information for scheduling a specific channel (S820).

Here, the specific channel may include at least one of PDSCH and PUSCH. For example, when a specific channel is a PDSCH, the scheduling information may include information for scheduling the PDSCH. As another example, when a specific channel is PUSCH, the scheduling information may include at least one of a UL-SCH indicator field, a CSI request field, and a PUSCH resource allocation field.

Based on the DCI including scheduling information for scheduling at least one of the PDSCH or the PUSCH, since the operation of the base station receiving ACK/NACK feedback for the TCI state indication information from the UE has been described in detail with reference to FIG. 7, duplicate description will be omitted.

For example, a specific slot (i.e., timing at which feedback on the TCI state is transmitted) may be a slot after the offset value indicated by the DCI from the slot in which the base station transmits the DCI.

As another example, a specific slot (i.e., timing at which feedback on the TCI state is transmitted) may be a slot after a specific offset value from a slot corresponding to a PDSCH scheduled by a DCI transmitted by a base station.

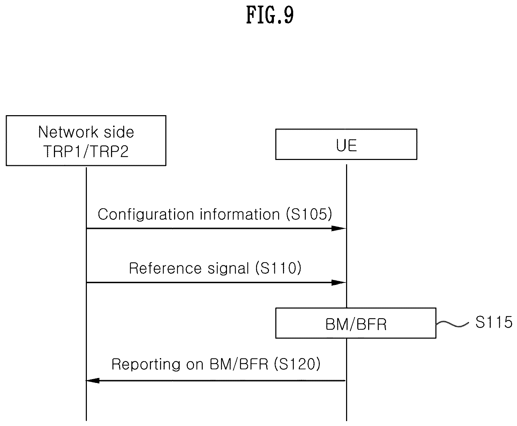

FIG. 9 is a diagram for describing a signaling procedure of a network side and a UE according to the present disclosure.

FIG. 9 shows an example of signaling between a network side and a UE in an M-TRP situation to which the above-described embodiments (For example, a combination of one or more of Embodiment 1, Embodiment 2, Embodiment 3, Embodiment 3-1, Embodiment 3-2 or detailed examples thereof) of the present disclosure can be applied.

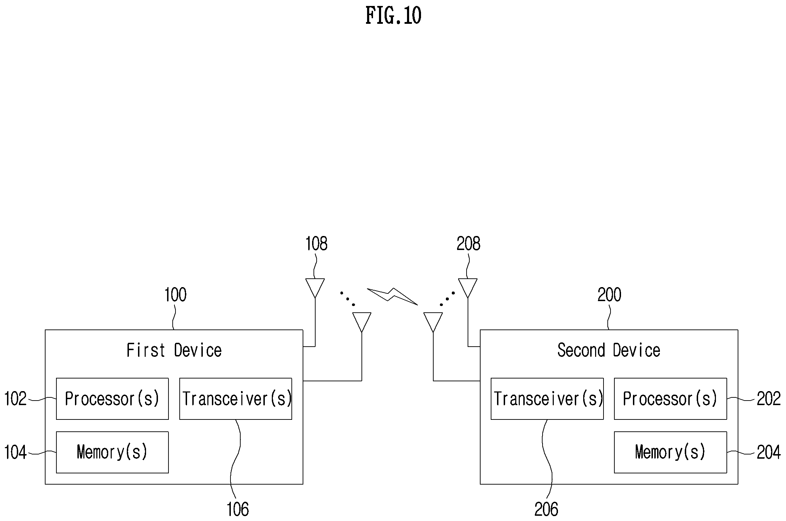

Here, the UE/network side is exemplary and may be applied to various devices as described with reference to FIG. 10. FIG. 9 is for convenience of description, and does not limit the scope of the present disclosure. In addition, some step(s) shown in FIG. 9 may be omitted depending on circumstances and/or settings. In addition, in the operation of the network side / LTE of FIG. 9, the above-described uplink transmission/reception operation, M-TRP related operation, etc. may be referred to or used.

In the following description, the network side may be one base station including a plurality of TRPs, or may be one cell including a plurality of TRPs. Alternatively, the network side may include a plurality of remote radio heads (RRHs)/remote radio units (RRUs). For example, an ideal/non-ideal backhaul may be established between TRP 1 and TRP 2 constituting the network side. In addition, although the following description is based on a plurality of TRPs, this may be equally extended and applied to transmission through a plurality of panels/cells, and may also be extended and applied to transmission through a plurality of RRHs/RRUs.

In addition, it is described based on a "TRP" in the following description, but as described above, a "TRP" may be applied by being substituted with an expression such as a panel, an antenna array, a cell (e.g., a macro cell/a small cell/a pico cell, etc.), a TP (transmission point), a base station(gNB, etc.), etc. As described above, a TRP may be classified according to information on a CORESET group (or a CORESET pool) (e.g., a CORESET index, an ID).

In an example, when one LTE is configured to perform transmission and reception with a plurality of TRPs (or cells), it may mean that a plurality of CORESET groups (or CORESET pools) are configured for one terminal. A configuration on such a CORESET group (or a CORESET pool) may be performed through higher layer signaling (e.g., RRC signaling, etc.).

In addition, a base station may generally mean an object which performs transmission and reception of data with a terminal. For example, the base station may be a concept which includes at least one TP(Transmission Point), at least one TRP(Transmission and Reception Point), etc. In addition, a TP and/or a TRP may include a panel, a transmission and reception unit, etc. of a base station.

The UE may receive configuration information from the network side through/using TRP1 and/or TRP2 (S105).

The configuration information may include information related to CORESET in which a plurality of TCI states are configured. The configuration information may include information related to network-side configuration (i.e., TRP configuration), resource allocation information related to transmission and reception based on M-TRP, and the like. The configuration information may be transmitted through higher layers (e.g., RRC, MAC CE). In addition, when the setting information is defined or configured in advance, the corresponding step may be omitted.

For example, as in the above-described embodiment (e.g., a combination of one or more of Example 1, Example 2, Example 3, Example 3-1, Example 3-2 or detailed examples thereof), the configuration information may include CORESET-related configuration information (e.g., ControlResourceSet IE). The CORESET-related configuration information may include a CORESET-related ID (e.g., controlResourceSetID), a CORESET pool index (e.g., CORESETPoolIndex) for CORESET, time/frequency resource configuration of CORESET, and TCI information related to CORESET. For example, the configuration information may include information related to beam management/BFR, etc., as described in the above-described embodiments (e.g., Embodiment 1 or a combination of one or more of its detailed Embodiments).

For example, an operation in which the UE (100 or 200 of FIG. 10) receives the configuration information from the network side(200 or 100 of FIG. 10) in step S105 may be implemented by the device of FIG. 10 to be described below. For example, referring to FIG. 10, one or more processors 102 may control one or more transceivers 106 and/or one or more memories 104 to receive the configuration information, and one or more transceivers 106 may receive the configuration information from a network side.

The LTE may transmit a reference signal for LTL transmission through/using TRP 1 and/or TRP 2 to the network side (S 110).

For example, the UE may receive RS 1 and/or RS 2 for beam management/BFD through/using TRP1 and/or TRP 2 at the network side.

For example, the operation of transmitting the reference signal from the UE (100 or 200 in FIG. 10) to the network side (200 or 100 in FIG. 10) in step S 110 described above may be implemented by the device of FIG. 10 to be described below. For example, referring to FIG. 10, one or more processors 102 may control one or more transceivers 106 and/or one or more memories 104 to transmit the reference signals, and the one or more transceivers 106 may transmit the reference signals to a network side.

The LTE may perform beam management/BFR based on the RS 1 and/or RS 2 through/using TRP 1 and/or TRP 2 from the network side (S115).

For example, a method for performing beam management/BFR may be performed based on the above-described embodiment (e.g., a combination of one or more of Embodiment 1, Embodiment 2, Embodiment 3, Embodiment 3-1, Embodiment 3-2 or detailed Embodiments thereof). For example, the UE may measure/estimate a theoretical BLER based on the reception quality of RS 1 and/or RS 2, and determine BF accordingly.

For example, the above-described operation of performing beam management/BFR by the UE (100 or 200 of FIG. 10) in step S115 may be implemented by the device of FIG. 10. For example, referring to FIG. 10, one or more processors 102 may control one or more memories 104 or the like to perform the beam management/BFR operation.

The UE may transmit the beam management/BFR report (e.g., BFRQ) to the network side through/using TRP 1 and/or TRP 2 (S120).

In this case, the beam management/BFR report (e.g., BFRQ, etc.) for TRP 1 and the beam management/BFR report (e.g., BFRQ, etc.) for TRP 2 may be transmitted separately or may be combined into one.

In addition, the UE is set to transmit a report on beam management/BFR (e.g., BFRQ, etc.) to the representative TRP (e.g., TRP 1), and transmission of a report (e.g., BFRQ, etc.) on beam management/BFR to another TRP (e.g., TRP 2) may be omitted. Alternatively, the UE may be configured to transmit a BFR report (e.g., BFRQ, etc.) through the same TRP as the TRP where the beam failure occurred. Alternatively, the LTE may be set to transmit a BFR report (e.g., BFRQ, etc.) to a TRP other than the TRP where the beam failure occurred.

For example, the network side that has received a BF report/BFRQ, etc. through/using TRP 1 and/or TRP 2 from the UE may transmit new BM/BFR related RS information for beam recovery to the UE.

For example, an operation in which the UE (100/200 in Fig. 10) transmits a beam management/BFR report (e.g., BFRQ, etc.) from the network side (100/200 in Fig. 10) in step S120 described above may be implemented by the device of FIG. 11 to be described below.

For example, referring to FIG. 10, one or more processors 102 may control one or more transceivers 106 and/or one or more memories 104, etc. to transmit reports for beam management/BFR (e.g., BFRQ, etc.), and one or more transceivers 106 may transmit a beam management/BFR report (e.g., BFRQ, etc.) to the network side.

Through the beam determined based on the above-described process, the UE may receive DCI 1 and data 1 scheduled by the corresponding DCI 1 through/using TRP 1 from the network side. In addition, the UE may receive DCI 2 and data 2 scheduled by the corresponding DCI 2 through/using TRP 2 from the network side. DCIs (e.g., DCI 1 and DCI 2) and data (e.g., Data 1 and Data 2) may be transmitted through a control channel (e.g., PDCCH, etc.) and a data channel (e.g., PDSCH, etc.), respectively. For example, DCI 1 may be received based on a first CORESET having a CORESETPoolindex set to 0 or not, and DCI 2 may be received based on a second CORESET having a CORESETPoolindex set to 1. For example, the DCIs (e.g., DCI 1 and DCI 2) and/or data (e.g., Data 1 and Data 2) may include control information/data related to the operations described in the above method (e.g., Embodiment 1 or a combination of one or more of its sub- Embodiments).

As mentioned above, the network-side/UE signaling and embodiments (e.g., a combination of one or more of Embodiment 1, Embodiment 2, Embodiment 3, Embodiment 3-1, Embodiment 3-2 or detailed Embodiments thereof) described above may be implemented by an apparatus to be described with reference to FIG. 10. For example, the network side (e.g., TRP 1 / TRP 2) may correspond to the first device 100 and the UE may correspond to the second device 200, and vice versa may be considered depending on circumstances.

For example, the aforementioned network-side/LTE signaling and operations (e.g., a combination of one or more of Embodiment 1, Embodiment 2, Embodiment 3, Embodiment 3-1, Embodiment 3-2 or detailed Embodiments thereof) may be processed by one or more processors (e.g., 102, 202) of FIG. 10, and the above-described network-side/UE signaling and operation (e.g., Embodiment 1 or a combination of one or more of its sub- Embodiments) may be stored in memory (e.g., one or more memories of FIG. 10 (e.g., 104, 204) in the form of instructions/programs (e.g., instructions, executable code) for driving at least one processor (e.g., 102 or 202) of FIG. 10.

General Device to which the Present Disclosure may be applied

FIG. 11 is a diagram which illustrates a block diagram of a wireless communication system according to an embodiment of the present disclosure.

In reference to FIG. 11, a first device 100 and a second device 200 may transmit and receive a wireless signal through a variety of radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure.

One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202.

Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices.

For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices.

In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208.

In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features.

An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer.

A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium.

A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name.

Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name.

Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method for a user equipment (UE) to perform uplink transmission in a wireless communication system, the method comprising:

   receiving downlink control information (DCI) including information indicating a transmission configuration indicator (TCI) state from a base station; and
   transmitting, to the base station, acknowledgment (ACK)/negative acknowledgment (NACK) feedback for the TCI state indication information in a specific slot based on whether the DCI includes scheduling information for scheduling a specific channel.

2. The method of claim 1, wherein:
   ACK/NACK feedback for the TCI state indication information includes ACK/NACK for a physical downlink control channel (PDCCH) carrying the DCI.

3. The method of claim 1, wherein:

   the specific channel is a physical downlink shared channel (PDSCH), and
   based on the DCI including the scheduling information for scheduling the PDSCH, ACK/NACK feedback for the TCI state indication information and ACK/NACK feedback for the PDSCH are transmitted to the base station in the specific slot through one physical uplink control channel(PUCCH).

4. The method of claim 3, wherein:
   the ACK/NACK feedback for the TCI state indication information is mapped to a specific position in a hybrid automatic repeat request(HARQ)-ACK codebook for transmission of ACK/NACK feedback for the PDSCH.

5. The method of claim 4, wherein:
   the specific position is a last bit of the HARQ-ACK codebook or the next bit of ACK/NACK information for the PDSCH included in the HARQ-ACK codebook.

6. The method of claim 3, wherein:
   ACK/NACK feedback for the TCI state indication information is mapped to a specific position of the HARQ-ACK payload corresponding to a cell in which the PDSCH is transmitted.

7. The method of claim 3, wherein:
   based on the DCI not including scheduling information for scheduling the PDSCH, ACK/NACK feedback for the TCI state indication information is mapped to a specific position in the HARQ-ACK codebook and transmitted to the base station in the specific slot.

8. The method of claim 1, wherein:
the specific slot is a slot after an offset value indicated by the DCI from a slot through which the DCI is transmitted.

9. The method of claim 1, wherein:

the specific channel is PDSCH, and
the specific slot is a slot after a specific offset value from a slot corresponding to the PDSCH scheduled by the DCI.

10. The method of claim 1, wherein:

the specific channel is a physical uplink shared channel (PUSCH), and
the scheduling information includes an uplink-shared channel (UL-SCH) indicator field and a channel state information (CSI) request field.

11. The method of claim 10, wherein:
Based on UL-SCH transmission being not indicated by the UL-SCH indicator field and CSI request being not indicated by the CSI request field, ACK/NACK feedback for the TCI state indication information is transmitted to the base station in the specific slot through the PUSCH.

12. The method of claim 10, wherein:
based on UL-SCH transmission being not indicated by the UL-SCH indicator field, based on the CSI request being not indicated by the CSI request field, and indication that ACK/NACK feedback for another PDSCH is transmitted in the specific slot, ACK/NACK feedback for the TCI state indication information is added to the ACK/NACK feedback for the other PDSCH and transmitted to the base station in the specific slot.

13. The method of claim 10, wherein:
based on UL-SCH transmission being not indicated by the UL-SCH indicator field, based on the CSI request being not indicated by the CSI request field, based on transmission of ACK/NACK feedback for another PDSCH being not indicated in the specific slot, feedback on the TCI state indication information is transmitted to the base station in the specific slot through PUCCH.

14. The method of claim 10, wherein:
based on UL-SCH transmission being not indicated by the UL-SCH indicator field, and a CSI request being indicated by the CSI request field, an aperiodic CSI report is transmitted to the base station through the PUSCH, and ACK/NACK feedback for the TCI state indication information is not transmitted to the base station in the specific slot.

15. A user equipment (LTE) performing uplink transmission in a wireless communication system, the LTE comprising:

at least one transceiver; and
at least one processor coupled to the at least one transceiver,
the at least one processor is configured to:

receive, from a base station through the at least one transceiver, downlink control information (DCI) including information indicating a transmission configuration indicator (TCI) state; and
transmit, to the base station through the at least one transceiver, acknowledgment (ACK)/negative acknowledgment (NACK) feedback for the TCI state indication information in a specific slot based on whether the DCI includes scheduling information for scheduling a specific channel.

16. A method for a base station to perform uplink reception in a wireless communication system, the method comprising:

transmitting, to a user equipment (UE), downlink control information (DCI) including information indicating a transmission configuration indicator (TCI) state; and
receiving, from the UE, acknowledgment (ACK)/negative acknowledgment (NACK) feedback for the TCI state indication information in a specific slot based on whether the DCI includes scheduling information for scheduling a specific channel.

**17.** A base station performing uplink reception in a wireless communication system, the base station comprising:

at least one transceiver; and
at least one processor coupled to the at least one transceiver,
wherein the at least one processor is configured to:

transmit, to a user equipment (UE) through the at least one transceiver, downlink control information (DCI) including information indicating a transmission configuration indicator (TCI) state; and
receive, from the UE through the at least one transceiver, acknowledgment (ACK)/negative acknowledgment (NACK) feedback for the TCI state indication information in a specific slot based on whether the DCI includes scheduling information for scheduling a specific channel.

**18.** A processing device configured to control a user equipment (UE) to perform uplink transmission in a wireless communication system, the processing device comprising:

at least one processor; and
at least one computer memory operatively coupled to the at least one processor and storing instructions for performing operations upon being executed by the at least one processor;
the operations include:

receiving downlink control information (DCI) including information indicating a transmission configuration indicator (TCI) state from a base station; and
transmitting, to the base station, acknowledgment (ACK)/negative acknowledgment (NACK) feedback for the TCI state indication information in a specific slot based on whether the DCI includes scheduling information for scheduling a specific channel.

**19.** At least one non-transitory computer readable medium storing at least one instruction, based on the at least one instruction being executed by at least one processor, an apparatus for performing beam failure recovery (BFR) in a wireless communication system controls to:

receive downlink control information (DCI) including information indicating a transmission configuration indicator (TCI) state from a base station; and
transmit, to the base station, acknowledgment (ACK)/negative acknowledgment (NACK) feedback for the TCI state indication information in a specific slot based on whether the DCI includes scheduling information for scheduling a specific channel.

FIG.1

# FIG.2

Radio Frame 10ms

Subframe 1ms

| 0 | 1 | 2 | 3 | 4 | 5 | 6 | 7 | 8 | 9 |

Fixed Size

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

# FIG.4

# FIG.5

FIG.6

## FIG.7

RECEIVING DCI INCLUDING INFORMATION INDICATING A TCI STATE FROM A BASE STATION — S710

TRANSMITTING, TO THE BASE STATION, ACK/NACK FEEDBACK FOR THE TCI STATE INDICATION INFORMATION IN A SPECIFIC SLOT BASED ON WHETHER THE DCI INCLUDES SCHEDULING INFORMATION FOR SCHEDULING A SPECIFIC CHANNEL — S720

## FIG.8

TRANSMITTING DCI INCLUDING INFORMATION INDICATING A TCI STATE TO A UE — S810

RECEIVING, FROM THE UE, ACK/NACK FEEDBACK FOR THE TCI STATE INDICATION INFORMATION IN A SPECIFIC SLOT BASED ON WHETHER THE DCI INCLUDES SCHEDULING INFORMATION FOR SCHEDULING A SPECIFIC CHANNEL — S820

FIG.9

# FIG.10

EP 4 283 898 A1

## INTERNATIONAL SEARCH REPORT

| International application No. |
| --- |
| **PCT/KR2022/000920** |

### A. CLASSIFICATION OF SUBJECT MATTER

**H04L 1/18**(2006.01)i; **H04L 5/00**(2006.01)i; **H04W 72/04**(2009.01)i; **H04W 72/12**(2009.01)i; **H04B 7/0408**(2017.01)i

According to International Patent Classification (IPC) or to both national classification and IPC

### B. FIELDS SEARCHED

Minimum documentation searched (classification system followed by classification symbols)

H04L 1/18(2006.01); H04L 1/16(2006.01); H04L 5/00(2006.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: TCI 상태(TCI state), DCI, 스케줄링(scheduling), HARQ ACK/NACK 피드백 (HARQ ACK/NACK feedback)

### C. DOCUMENTS CONSIDERED TO BE RELEVANT

| Category* | Citation of document, with indication, where appropriate, of the relevant passages | Relevant to claim No. |
| --- | --- | --- |
| Y | US 2020-0389897 A1 (MONDAL, Bishwarup et al.) 10 December 2020 (2020-12-10)<br>See claims 35-40. | 1-2,9,15-19 |
| A | | 3-8,10-14 |
| Y | SAMSUNG. Multi-beam enhancements. R1-2008148, 3GPP TSG RAN WG1 #103-e, e-Meeting.<br>01 November 2020.<br>See pages 10-11. | 1-2,9,15-19 |
| A | NEC. Discussion on multi-beam operation. R1-2008943, 3GPP TSG RAN WG1 #103-e, e-Meeting.<br>01 November 2020.<br>See pages 1-4. | 1-19 |
| A | WO 2020-017874 A1 (LG ELECTRONICS INC.) 23 January 2020 (2020-01-23)<br>See paragraphs [0402]-[0422]; and figures 9-10. | 1-19 |
| A | WO 2019-017751 A1 (LG ELECTRONICS INC.) 24 January 2019 (2019-01-24)<br>See paragraphs [0723]-[0756]; and figures 20-21. | 1-19 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **25 April 2022** | **25 April 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.

**PCT/KR2022/000920**

| Patent document cited in search report | | | Publication date (day/month/year) | Patent family member(s) | | | Publication date (day/month/year) |
|---|---|---|---|---|---|---|---|
| US | 2020-0389897 | A1 | 10 December 2020 | None | | | |
| WO | 2020-017874 | A1 | 23 January 2020 | US | 2021-0314126 | A1 | 07 October 2021 |
| WO | 2019-017751 | A1 | 24 January 2019 | CN | 110959268 | A | 03 April 2020 |
| | | | | EP | 3462664 | A1 | 03 April 2019 |
| | | | | EP | 3462664 | B1 | 02 March 2022 |
| | | | | JP | 2020-519214 | A | 25 June 2020 |
| | | | | KR | 10-1963365 | B1 | 28 March 2019 |
| | | | | KR | 10-2019-0010507 | A | 30 January 2019 |
| | | | | KR | 10-2019-0035633 | A | 03 April 2019 |
| | | | | KR | 10-2341473 | B1 | 20 December 2021 |
| | | | | US | 11101863 | B2 | 24 August 2021 |
| | | | | US | 11128360 | B2 | 21 September 2021 |
| | | | | US | 11128361 | B2 | 21 September 2021 |
| | | | | US | 11133853 | B2 | 28 September 2021 |
| | | | | US | 2019-0058517 | A1 | 21 February 2019 |
| | | | | US | 2020-0127722 | A1 | 23 April 2020 |
| | | | | US | 2020-0127723 | A1 | 23 April 2020 |
| | | | | US | 2020-0127724 | A1 | 23 April 2020 |

Form PCT/ISA/210 (patent family annex) (July 2019)